# EUROPÄISCHE PATENTSCHRIFT

(11) **EP 2 378 144 B1**
(45) Veröffentlichungstag und Bekanntmachung des Hinweises auf die Patenterteilung: **05.09.2012**
(21) Anmeldenummer: 10003879.3
(22) Anmeldetag: 13.04.2010
(51) Int. Cl.: F16C 29/02, F16H 25/24, F16C 29/00

(54) **Spindelantriebsvorrichtung**
Spindle drive device
Dispositif d'entraînement d'une broche

(43) Veröffentlichungstag der Anmeldung: 19.10.2011
(73) Patentinhaber: FESTO AG & Co. KG, 73734 Esslingen (DE)
(72) Erfinder: Buk, Peter, 70619 Stuttgart (DE); Rein, Bernd, 73342 Bad Ditzenbach (DE); Hanisch, Ralf, 73730 Esslingen (DE)
(74) Vertreter: Abel, Martin

(56) Entgegenhaltungen:
- EP-A1- 0 482 268
- DE-A1- 4 104 717
- DE-A1- 4 110 131
- DE-A1-102004 004 348

## Beschreibung

Die Erfindung betrifft eine Spindelantriebsvorrichtung, mit einem Gehäuse, in dem sich eine drehbare Antriebsspindel erstreckt, und mit einer Spindelabstützeinrichtung zur Querabstützung der Antriebsspindel bezüglich dem Gehäuse, wobei die Spindelabstützeinrichtung mehrere um die Antriebsspindel herum verteilt an dem Gehäuse angeordnete, sich parallel zu der Antriebsspindel erstreckende Führungsabschnitte aufweist und außerdem über mindestens eine relativ zu der Antriebsspindel und zu dem Gehäuse axial verschiebbare Abstützeinheit verfügt, die wenigstens zwei die Antriebsspindel unter axialem Abstand zueinander umschließende und durch eine Strebenanordnung miteinander verbundene Abstützköpfe umfasst, die jeweils mehrere mit jeweils einem der Führungsabschnitte in Führungseingriff stehende Abstützabschnitte aufweisen, wobei jeder Abstützabschnitt mindestens eine gleitverschieblich an einer Führungsfläche des zugeordneten Führungsabschnittes anliegende Abstützfläche aufweist, die Bestandteil eines als gesondertes Element an einem Kopfkörper des Abstützkopfes fixierten Abstützelementes ist.

Eine derartige Spindelantriebsvorrichtung eignet sich zur Erzeugung einer Linearbewegung eines mit der Antriebsspindel in Gewindeeingriff stehenden Abtriebsteiles. Die Antriebsspindel wird hierzu mittels einer geeigneten Antriebseinheit, beispielsweise ein Elektromotor, in Rotation versetzt, so dass sich das nicht verdrehbare Abtriebsteil entlang der Antriebsspindel verlagert. Die Linearbewegung des Abtriebsteiles kann zur Betätigung beliebiger Komponenten abgegriffen werden, beispielsweise in der Handhabungstechnik. Problematisch sind allerdings Anwendungen, bei denen die Antriebsspindel über eine große Länge verfügt. Vor allem bei hohen Drehzahlen kann die Antriebsspindel hier zu Schwingungen neigen, die die Funktion der Spindelantriebsvorrichtung beeinträchtigen.

Aus EP 0 482 268 A1 ist eine Spindelantriebsvorrichtung der eingangs genannten Art bekannt, die zur Vermeidung der vorstehend erwähnten Schwingungsproblematik mit einer Spindelabstützeinrichtung ausgestattet ist. Die Spindelabstützeinrichtung enthält eine bezüglich der Antriebsspindel linear bewegliche Abstützeinheit, die zwei axial beabstandete Abstützköpfe umfasst, die jeweils die Antriebsspindel umschließen und untereinander mittels einer Strebenanordnung verbunden sind. Das Abtriebsteil sitzt zwischen den beiden Abstützköpfen und übt je nach Bewegungsrichtung eine Schubkraft auf den einen oder anderen Abstützkopf auf, um die Abstützeinheit mitzunehmen. Die Abstützeinheit ihrerseits ist am Gehäuse der Spindelantriebsvorrichtung linear verschiebbar und zugleich unverdrehbar gelagert. Hierzu sind am Gehäuse zwei rippenförmige Führungsabschnitte ausgebildet, die von komplementären Abstützabschnitten der Abstützköpfe gleitverschieblich umgriffen werden. Um die Reibung zu minimieren, können die Abstützköpfe einen als Kopfkörper bezeichenbaren Grundkörper aufweisen, an dem selbstschmierende Abstützelemente fixiert sind, die jeweils eine Abstützfläche bilden, die gleitverschieblich an einer Führungsfläche des zugeordneten Führungsabschnittes anliegt.

Durch die Schmierung lässt sich zwar ein leichtgängiges Verschieben der Abstützeinheit gewährleisten. Das Schmiermittel führt jedoch im Laufe der Zeit unweigerlich zu einer Verschmutzung der Vorrichtung und kann sogar, wenn Schmutzpartikel daran anhaften, die Lebensdauer beeinträchtigen. Ist der Schmiermittelvorrat erschöpft, ist zudem, insbesondere auch aufgrund toleranzbedingten Spiels, mit einer nicht unerheblichen Geräuschentwicklung beim Betrieb der Spindelantriebsvorrichtung zu rechnen.

Einer ähnlichen Problematik unterliegt die Spindelantriebsvorrichtung gemäß WO 96/01198 A1, die einen ähnlichen Aufbau hat, allerdings ohne gesonderte Abstützelemente im Kontaktbereich zwischen den Führungsabschnitten und den Abstützabschnitten. Als Abstützabschnitte sind scheibenförmige Elemente vorgesehen, die am Innenumfang eines kreiszylindrischen Gehäuses anliegen.

Aus der AT 21 155 E ist eine Positioniervorrichtung bekannt, die über eine Antriebsspindel verfügt, der jedoch keine spezielle Spindelabstützteinrichtung zugeordnet ist. Hier ist das mit der Antriebsspindel in Eingriff stehende Abtriebsteil als Läufer ausgebildet, und mittels Buchsen an Gleitschienen montiert. Mehrere dieser Buchsen sind im Läufer an nachgiebigen Mitteln montiert, um einen selbsttätigen Toleranzausgleich zwischen der Linearbewegung des Abtriebsteils und dem Gehäuse zu gewährleisten.

Aus der DE 41 10 131 A1 und der DE 41 04 717 A1 ist jeweils eine schwingungsgedämpfte Geradführungseinheit bekannt, die einen längs einer Schiene linear bewegbaren Schieber aufweist, der über ein elastisches Teil an einem gleitverschieblich an der Schiene anliegenden Kontaktteil abgestützt ist.

Es ist die Aufgabe der vorliegenden Erfindung, eine Spindelantriebsvorrichtung der eingangs genannten Art zu schaffen, die über eine verschleiß- und geräuscharm arbeitende Spindelabstützeinrichtung verfügt.

Zur Lösung dieser Aufgabe ist vorgesehen, dass die Führungsabschnitte von sich in der Achsrichtung der Antriebsspindel erstreckenden Längsnuten und die Abstützabschnitte von in jeweils einen der nutförmigen Führungsabschnitte eintauchenden Vorsprüngen der Abstützköpfe gebildet sind, wobei zwischen dem Abstützelement und dem Kopfkörper mindestens eine elastisch nachgiebige Dämpfungsschicht angeordnet ist, durch die das Abstützelement mit seiner Abstützfläche in nachgiebiger Weise an die Führungsfläche angedrückt ist.

Auf diese Weise stützt sich die Antriebsspindel radial an der mindestens einen Abstützeinheit ab, die ihrerseits durch das Zusammenwirken zwischen den Abstützköpfen und den Führungsabschnitten des Gehäuses am Gehäuse abgestützt ist. Wird die Abstützeinheit, insbesondere durch ein von der Antriebsspindel angetriebenes Abtriebsteil, in der Längsrichtung der Antriebsspindel verschoben, gleitet es mit den an seinen Abstützelementen ausgebildeten Abstützflächen auf den Führungsflächen der Führungsabschnitte. Bedingt durch die elastisch nachgiebige und bevorzugt gummielastische Dämpfungsschicht, die zwischen jedem Abstützelement und dem Kopfkörper eingegliedert ist, werden die Abstützflächen bezüglich den Führungsflächen vorgespannt, so dass stets ein spielfreier Kontakt gegeben ist, so dass beim Betrieb der Spindelantriebsvorrichtung kein Rattern auftritt und das Betriebsgeräusch sehr gering ist. Die Dämpfungsschicht bewirkt überdies eine nachhaltige Schwingungsdämpfung und entkoppelt die sich bewegenden Komponenten von dem stationären Gehäuse. Bei alledem kann auf nur kostenintensiv herstellbare Führungsmittel oder gar Schmiermaßnahmen verzichtet werden. Vor allem im Hinblick auf eine platzsparende Befestigung der Strebenanordnung an den Abstützköpfen ist es besonders vorteilhaft, dass die Führungsabschnitte in Form von sich in Achsrichtung der Antriebsspindel erstreckenden Längsnuten ausgebildet sind und die Abstützabschnitte die Gestalt von Vorsprüngen haben, die jeweils in einen der nutförmigen Führungsabschnitte eintauchen. Diese Vorsprünge eignen sich beispielsweise sehr gut für die Befestigung der Strebenanordnung, insbesondere wenn selbige aus mehreren stabförmigen Verbindungsstreben besteht, die in die Abstützköpfe eingreifen.

Vorteilhafte Weiterbildungen der Erfindung gehen aus den Unteransprüchen hervor.

Vorzugsweise ist auf der Antriebsspindel ein mit selbiger in Gewindeeingriff stehendes Abtriebsteil angeordnet, das zu einer linearen Abtriebsbewegung angetrieben wird, wenn die Antriebsspindel, insbesondere durch eine elektromotorische Antriebseinheit, zu einer Rotationsbewegung angetrieben wird. Das Abtriebsteil ist bevorzugt zwischen den beiden Abstützköpfen der Abstützeinheit angeordnet und hat in diesem Bereich eine geringere Länge als der lichte Abstand zwischen den beiden Abstützköpfen beträgt. Solange sich das Abtriebsteil nur in dem zwischen den beiden Abstützköpfen vorhandenen Zwischenraum bewegt, verharrt die Abstützeinheit ortsfest. Überschreitet das Abtriebsteil jedoch diesen Bereich, übt es eine Schubkraft auf die Abstützeinheit aus und nimmt selbige mit, so dass auch die Zone des Abstützens der Antriebsspindel verlagert wird.

Die Spindelabstützeinrichtung kann, insbesondere in Abhängigkeit von der Länge der Antriebsspindel, über nur eine einzige Abstützeinheit verfügen oder mehrere miteinander gekoppelte Abstützeinheiten aufweisen. Im letztgenannten Fall ist insbesondere eine über kürzere Abmessungen verfügende Abstützeinheit zwischen die Abstützköpfe einer eine größere Länge aufweisenden Abstützeinheit eingegliedert. Ohne weiteres können aber auch mehr als zwei Abtriebseinheiten in vergleichbarer Weise miteinander kombiniert sein.

Außen am Gehäuse der Spindelantriebsvorrichtung ist zweckmä-βigerweise ein Schlittenkörper angeordnet, der in axial verschiebbar geführter Weise gelagert ist und der derart mit dem Abtriebsteil bewegungsgekoppelt ist, dass er durch das Abtriebsteil zu einer Linearbewegung in der Längsrichtung des Gehäuses angetrieben werden kann. Der Schlittenkörper kann über Befestigungsmittel verfügen, an denen sich eine zu bewegende Komponente festlegen lässt, beispielsweise eine Komponente einer Maschine oder eine für Handhabungszwecke nutzbare Greifvorrichtung.

Als Dämpfungsschicht wird zweckmäßigerweise ein flexibel zusammendrückbares, elastisch rückstellende Eigenschaften aufweisendes Material verwendet. Insbesondere wird ein Schaumstoff verwendet, vorzugsweise ein Polyurethanschaum. Vorhandene Poren in der Dämpfungsschicht gewährleisten ein sehr gutes Verformungsvermögen und bewirken aufgrund eingeschlossener Luft ein optimales Dämpfungsvermögen.

Die Dämpfungsschicht ist vorzugsweise in Form eines gesonderten Dämpfungselementes ausgeführt, das zwischen dem Abstützelement und dem Kopfkörper angeordnet ist. Es kann sich beispielsweise um ein platten-, matten- oder streifenförmiges Element handeln. Vorzugsweise ist es an dem Kopfkörper und/oder an dem Abstützelement befestigt, insbesondere mittels einer nur seine Randschicht beeinflussenden Klebeverbindung, so dass die Verformbarkeit nicht beeinträchtigt wird. Es ist besonders zweckmäßig, jeden Abstützabschnitt mit zwei relativ zueinander und unabhängig voneinander relativ zum Kopfkörper beweglichen Abstützelementen auszustatten, die jeweils mindestens eine an einer Führungsfläche anliegende Abstützfläche aufweisen. Auf diese Weise besteht eine besonders einfache Möglichkeit zur Abstützung des Abstützkopfes in unterschiedlichen Richtungen.

Vorzugsweise verfügt jeder Abstützabschnitt über zwei Abstützelemente, wobei jedes dieser Abstützelemente eine erste Abstützfläche aufweist und diese ersten Abstützflächen einander entgegengesetzt orientiert sind. Jedes Abstützelement stützt sich über eine Dämpfungsschicht derart am Kopfkörper ab, dass die ersten Abstützflächen in ihren Normalenrichtungen relativ zueinander und auch relativ zum Kopfkörper beweglich sind.

Die beiden Abstützelemente können gänzlich eigenständige und nicht zusammenhängende Komponenten sein. Insbesondere zugunsten einer einfachen Montage ist es jedoch vorteilhaft, wenn die einem jeweiligen Abstützabschnitt zugeordneten Abstützelemente mittels einer flexiblen Filmscharnieranordnung zu einer Baueinheit zusammengefasst sind. Die Filmscharnieranordnung hält die Abstützelemente verliersicher zusammen, ohne deren mit dem Vorhandensein der Dämpfungsschicht zusammenhängende relative Beweglichkeit einzuschränken.

Besonders zweckmäßig ist es, wenn jedes Abstützelement zusätzlich zu der ersten Abstützfläche eine winkelig und insbesondere rechtwinkelig dazu ausgerichtete weitere, zweite Abstützfläche aufweist, der ebenfalls eine Führungsfläche des zugeordneten Führungsabschnittes gegenüberliegt. Durch entsprechende Anordnung der Dämpfungsschicht lässt sich hierbei gewährleisten, dass jedes Abstützelement in zwei quer und insbesondere rechtwinkelig zueinander orientierten Richtungen relativ zum Kopfkörper beweglich ist, wobei diese beiden Bewegungsmöglichkeiten insbesondere voneinander unabhängig sind und sich überlagernde Relativbewegungen stattfinden können.

Zweckmäßigerweise bilden bei einem nutförmigen Führungsabschnitt sowohl dessen einander zugewandte Nutflanken als auch der Nutgrund jeweils eine Führungsfläche zum abstützenden Zusammenwirken mit den Abstützköpfen. Auf diese Weise besteht die vorteilhafte Möglichkeit einer gedämpften Abstützung jedes Abstützkopfes in sowohl der Umfangsrichtung der Abtriebswelle als auch in einer dazu radialen Richtung. Die an den Nutflanken ausgebildeten Führungsflächen übernehmen insbesondere die Abstützung gegen Drehmomentbelastungen der Abstützköpfe, die die Abstützköpfe dadurch erfahren können, dass die Antriebsspindel mit dem Außenumfang ihres Gewindes reibschlüssig am Innenumfang der Abstützköpfe anliegt.

Für die Abstützelemente ist eine im Querschnitt L-förmige Gestaltung besonders vorteilhaft. Jeder L-Schenkel kann hierbei eine von zwei rechtwinkelig zueinander ausgerichteten Abstützflächen aufweisen, von denen in Verbindung mit einem nutförmigen Führungsabschnitt die eine an einer Nutflanke und die andere am Nutgrund des nutförmigen Führungsabschnittes gleitverschieblich anliegen kann.

Die Abstützelemente sind zweckmäßigerweise nur lose an den Kopfkörper angesetzt und insbesondere von radial außen her aufgesteckt. Zur axialen Fixierung können sie an ihren beiden Stirnseiten über je mindestens eine Haltewand verfügen, die im angesetzten Zustand einen Radialvorsprung des Kopfkörpers stirnseitig flankieren.

Jeder Kopfkörper kann im Bereich jedes Abstützabschnittes einen Radialvorsprung aufweisen, der mindestens ein Abstützelement trägt. Es besteht die vorteilhafte Möglichkeit, die Dämpfungsschichten so auszubilden und anzuordnen, dass sie den Radialvorsprung U-förmig umgreifen. Diese Formgebung lässt sich besonders einfach dadurch realisieren, dass zur Realisierung der Dämpfungsschichten ein elastisch nachgiebiges und vorzugsweise gummielastisch verformbares Dämpfungselement verwendet wird, das platten-, matten- oder streifenförmig ausgebildet ist und das durch Umbiegen in die U-Form gebracht wird.

Die Strebenanordnung weist vorzugsweise mehrere sich axial zwischen den Abstützköpfen erstreckende stabförmige Verbindungsstreben auf, die jeweils in eine Aufnahmebohrung des zugeordneten Kopfkörpers eingreifen. Zur Fixierung einer Verbindungsstrebe in einer Aufnahmebohrung ist der Kopfkörper mit mindestens einer die Aufnahmebohrung durchquerenden Querbohrung versehen, in die eine Befestigungsklemme eingesetzt ist, in die eine eingesteckte Verbindungsstrebe eintaucht. Um die Befestigungsklemme sehr einfach montieren und demontieren zu können, ist zweckmäßigerweise die Dämpfungsschicht und vorzugsweise auch das mindestens eine Abstützelement mit einem mit der mindestens einen Querbohrung fluchtenden Durchgangsloch versehen.

Nachfolgend wird die Erfindung anhand der beiliegenden Zeichnung näher erläutert. In dieser zeigen:
- Figur 1: eine bevorzugte Ausführungsform der erfindungsgemäßen Spindelantriebsvorrichtung in einer perspektivischen Darstellung,
- Figur 2: einen Querschnitt durch die Spindelantriebsvorrichtung aus Figur 1 gemäß Schnittlinie II-II,
- Figur 3: eine teilweise aufgebrochene perspektivische Darstellung der aus Figur 1 ersichtlichen Spindelantriebsvorrichtung, wobei das mit der Antriebsspin-

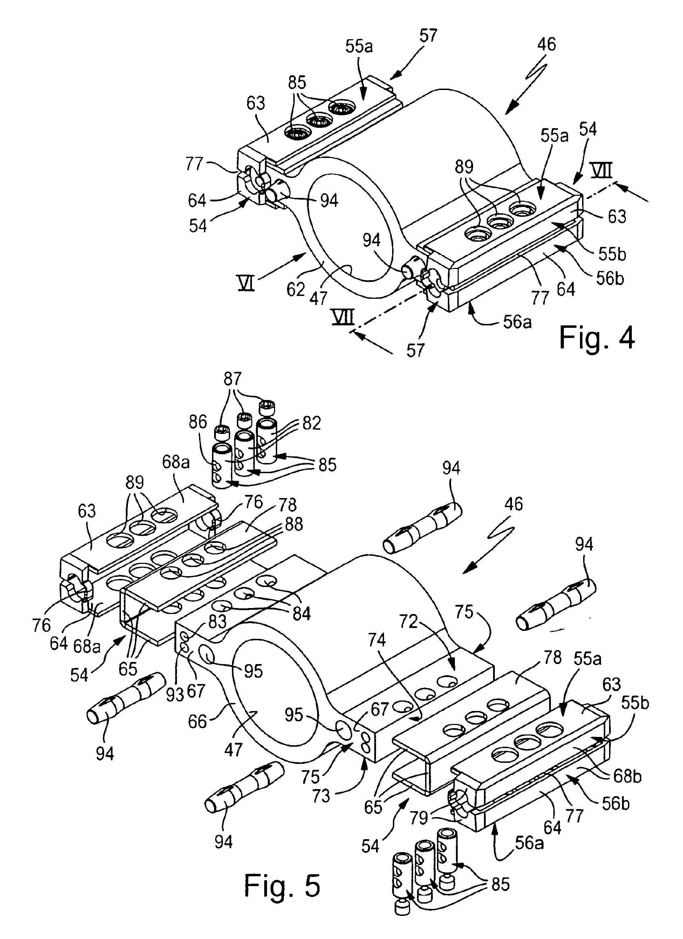

- Figur 4: del in Gewindeeingriff stehende Abtriebsteil strichpunktiert angedeutet ist, eine perspektivische Einzeldarstellung eines Abstützkopfes der bei der Spindelantriebsvorrichtung zum Einsatz kommenden Abstützeinheit bevorzugter Bauart,
- Figur: 5 eine Explosionsdarstellung des aus Figur 4 ersichtlichen Abstützkopfes,
- Figur 6: eine axiale Stirnansicht des aus Figur 4 ersichtlichen Abstützkopfes mit Blickrichtung gemäß Pfeil VI, und
- Figur 7: einen Schnitt durch einen Abstützkopf im Bereich eines Abstützabschnittes gemäß Schnittlinie VII-VII aus Figuren 2, 4 und 6.

Die in ihrer Gesamtheit mit Bezugsziffer 1 bezeichnete Spindelantriebsvorrichtung verfügt über ein längliches Gehäuse 2, das beim Ausführungsbeispiel einen länglichen, vorzugsweise als Strangpress-Profilteil ausgebildeten Gehäusehauptkörper 3 sowie einen ersten und zweiten, jeweils an einer der Stirnseiten des Gehäusehauptkörpers 3 angeordneten Gehäusedeckel 4, 5 aufweist. Die beiden Gehäusedeckel 4, 5 sind exemplarisch an die zugeordnete Stirnfläche des Gehäusehauptkörpers 3 angesetzt und daran durch Befestigungsschrauben 6 fixiert.

Das Gehäuse 2 hat eine Längsachse, die strichpunktiert bei 7 angedeutet ist.

Außen an dem Gehäuse 2 ist in dessen peripherem Bereich ein Schlittenkörper 8 angeordnet, der relativ zum Gehäuse 2 unter

Ausführung einer durch einen Doppelpfeil angedeuteten Arbeitsbewegung 12 in Achsrichtung der Längsachse 7 bewegbar ist. Um diese Bewegung ausführen zu können, ist der Schlittenkörper 8 über Linearführungsmittel 13 an dem Gehäuse 2 verschiebbar gelagert. Exemplarisch beinhalten die Linearführungsmittel 13 zum einen zwei am Außenumfang des Gehäusehauptkörpers 3 angeordnete, zur Längsachse 7 parallele Führungsschienen 13a und zum anderen als Bestandteil des Schlittenkörpers 8 ausgeführte Lagereinheiten 13b, die an den Führungsschienen 13a verschiebbar gelagert sind und die beispielsweise als Wälzlagereinheiten und/oder als Gleitlagereinheiten ausgeführt sind.

An dem Schlittenkörper 8 angeordnete Befestigungsmittel 14, beispielsweise in Form von Befestigungsbohrungen, erlauben die Fixierung mindestens einer durch Verlagerung des Schlittenkörpers 8 zu bewegenden Komponente, beispielsweise ein Maschinenteil oder eine zu Handhabungszwecken eingesetzte Greifvorrichtung.

Im Innern des Gehäuses 2 erstreckt sich in Achsrichtung der Längsachse 7 ein Aufnahmeraum 15. Letzterer durchsetzt zweckmäßigerweise den Gehäusehauptkörper 3 in voller Länge und ist stirnseitig durch die beiden Gehäusedeckel 4, 5 verschlossen.

In dem Aufnahmeraum 15 erstreckt sich axial, also in Achsrichtung der Längsachse 7 des Gehäuses 2, eine um ihre Längsachse 33 drehbare Antriebsspindel 16. Die Antriebsspindel 16 ist mit ihren beiden axialen Endabschnitten in den beiden Gehäusedeckeln 4, 5 drehbar gelagert.

Zumindest der erste Gehäusedeckel 4 verfügt über eine den Durchgriff der Antriebsspindel 16 ermöglichende Durchbrechung 17. Dort ragt ein Antriebs-Endabschnitt 18 der Antriebsspindel 16 heraus. Eine außen insbesondere lösbar an den ersten Gehäusedeckel 4 angebaute, in der Zeichnung gestrichelt angedeutete Antriebseinheit 22 steht mit dem Antriebs-Endabschnitt 18 in Antriebsverbindung. Bei der Antriebseinheit 22 handelt es sich beispielsweise um einen Fluidmotor, insbesondere aber um einen Elektromotor, beispielsweise einen Schrittmotor oder einen Servomotor. Jedenfalls besteht somit die Möglichkeit, die Antriebsspindel 16 durch die Antriebseinheit 22 zu einer durch einen Doppelpfeil angedeuteten Rotationsbewegung 23 wahlweise im Uhrzeigersinn oder gegen den Uhrzeigersinn anzutreiben.

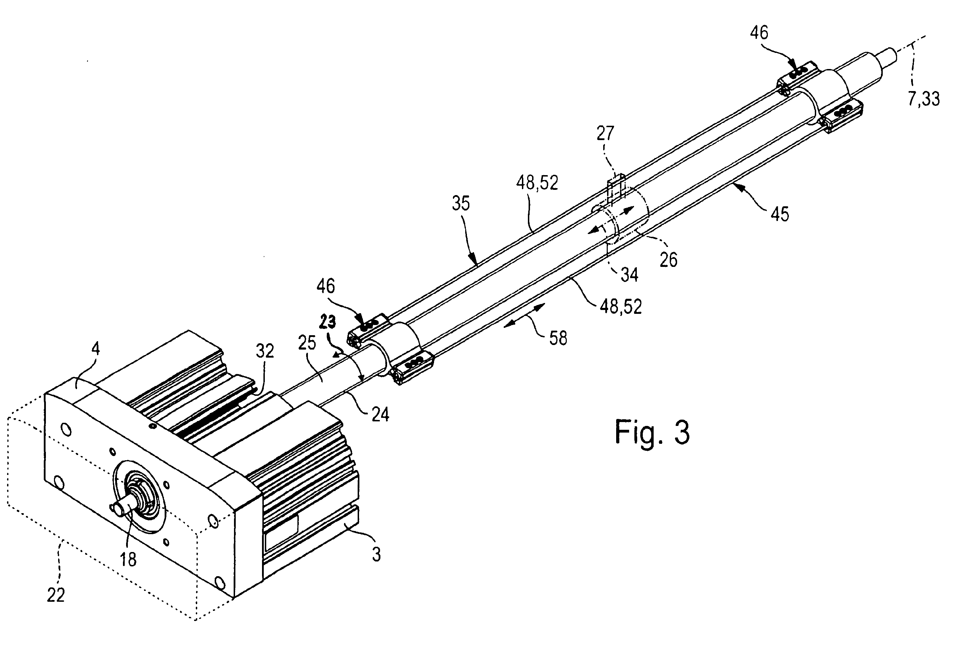

Zumindest der sich in dem Aufnahmeraum 15 erstreckende Längenabschnitt der Antriebsspindel 16 ist als ein Außengewinde 24 aufweisender Gewindeabschnitt 25 ausgebildet. Auf diesem Gewindeabschnitt 25 sitzt ein mit dem Außengewinde 24 in Gewindeeingriff stehendes, in Figur 3 strichpunktiertes Abtriebsteil 26. Das Abtriebsteil 26 ist mit einem Muttergewinde versehen und/oder mit einer Gewindemutter ausgestattet, das bzw. die mit dem Außengewinde 24 in Gewindeeingriff steht.

Der Aufnahmeraum 15 ist umfangsseitig von einer einen Bestandteil des Gehäuses 2 und insbesondere des Gehäusehauptkörpers 3 bildenden Begrenzungswand 28 umschlossen. Diese Begrenzungswand 28 ist an einer Stelle des Umfanges des Aufnahmeraumes 15 von einem sich in Achsrichtung der Längsachse 7 erstreckenden Längsschlitz 32 radial durchsetzt. Der Längsschlitz 32 mündet außen zu derjenigen Längsseite des Gehäusehauptkörpers 3 aus, in deren Bereich der Schlittenkörper 8 angeordnet ist.

Das Abtriebsteil 26 verfügt über einen den Längsschlitz 32 durchsetzenden Kopplungsabschnitt 27, der mit dem Schlittenkörper 8 in zumindest der Achsrichtung der Längsachse 7 bewegungsgekoppelt ist. Auf diese Weise ist eine Antriebsverbindung zwischen dem Abtriebsteil 26 und dem Schlittenkörper 8 realisiert. Die Verbindung zwischen dem Kopplungsabschnitt 27 und dem Schlittenkörper 8 bewirkt außerdem eine Verdrehsicherung des Abtriebsteiles 26 bezüglich dem Gehäuse 2, so dass das Abtriebsteil 26 nicht um die zweckmäßigerweise mit der Längsachse 7 des Gehäuses 2 zusammenfallende Längsachse 33 der Antriebsspindel 16 verdrehbar ist.

Wird durch eine Antriebseinheit 22 ein Antriebsdrehmoment in die Antriebsspindel 16 eingeleitet, führt letztere die schon erwähnte Rotationsbewegung 23 aus, was aufgrund des bestehenden Gewindeeingriffes dazu führt, dass das verdrehgesicherte Abtriebsteil 26 in Achsrichtung der Längsachse 33 der Antriebsspindel 16 eine durch einen strichpunktierten Doppelpfeil angedeutete lineare Abtriebsbewegung 34 ausführt. Aufgrund der erläuterten Bewegungskopplung hat dies unmittelbar synchron die Arbeitsbewegung 12 des Schlittenkörpers 8 zur Folge. Die Bewegungsrichtung hängt dabei von der Rotationsrichtung der Antriebsspindel 16 ab.

Wenn die Antriebsspindel 16 über eine große, nicht abgestützte Länge verfügt, kann sie - vor allem bei hohen Drehzahlen - zum Schwingen neigen. Die beispielsgemäße Spindelantriebsvorrichtung 1 ist mit einer Spindelabstützeinrichtung 35 ausgestattet, die relevante Schwingungen verhindert, indem sie eine Querabstützung der Antriebsspindel 16 bezüglich dem Gehäuse 2 bewirkt.

Ein Vorteil dieser Spindelabstützeinrichtung 35 besteht darin, dass sie ohne stationäre Abstützmaßnahmen auskommt. Die abgestützte Zone kann in der Längsrichtung der Antriebsspindel 16 wandern, insbesondere in Abhängigkeit von der bezüglich der Antriebsspindel 16 eingenommenen Axialposition des Abtriebsteiles 26.

Die Spindelabstützeinrichtung 35 enthält mehrere in Umfangsrichtung um die Antriebsspindel 16 herum verteilt angeordnete Führungsabschnitte 36, die am Gehäuse 2, insbesondere an dem Gehäusehauptkörper 3 angeordnet sind und sich jeweils parallel zu der Antriebsspindel 16 erstrecken. Vorzugsweise sind genau zwei derartige Führungsabschnitte 36 vorhanden, die in bezüglich der Längsachse 33 der Antriebsspindel 16 einander diametral gegenüberliegenden Bereichen, also auf einander entgegengesetzten Längsseiten der Antriebsspindel 16, angeordnet sind.

Die Führungsabschnitte 36 erstrecken sich zweckmäßigerweise jeweils über die gesamte Länge des Aufnahmeraumes 15 und sind bevorzugt an der Begrenzungswand 28 angeordnet oder durch eine besondere Gestaltung dieser Begrenzungswand 28 realisiert.

Vorzugsweise ist jeder Führungsabschnitt 36 von einer sich in Achsrichtung der Antriebsspindel 16 erstreckenden Längsnut 37 gebildet, ist also nutförmig gestaltet. Jede dieser Längsnuten 37 hat zwei sich gegenüberliegende Nutflanken 38a, 38b sowie einen Nutgrund 39. Die Längsnuten 37 sind so ausgerichtet, dass ihre dem Nutgrund 39 gegenüberliegenden schlitzartigen Nutöffnungen der Antriebsspindel 16 zugewandt sind. Vorzugsweise liegen sich die beiden Längsnuten 37 bezüglich der Längsachse 33 diametral gegenüber.

Jeder Führungsabschnitt 36 weist mindestens eine Führungsfläche 42, 43, 44 auf. Exemplarisch bildet die jeweils eine Nutflanke 38a eine erste Führungsfläche 42, die jeweils andere Nutflanke 38b eine zweite Führungsfläche 43 und der Nutgrund 39 eine dritte Führungsfläche 44. Jede der Führungsflächen 42, 43, 44 erstreckt sich zweckmäßigerweise über die gesamte Länge des Aufnahmeraumes 15.

Die Spindelabstützeinrichtung 35 enthält als weiteren Bestandteil mindestens eine - beim Ausführungsbeispiel genau eine - Abstützeinheit 45, die der Antriebsspindel 16 zugeordnet ist. Die Abstützeinheit 45 ist relativ zu der Antriebsspindel 16 und auch relativ zum Gehäuse 2 in der Achsrichtung der Längsachse 33 der Antriebsspindel 16 verschiebbar. Indem die Abstützeinheit 45 insgesamt eine geringere Länge hat als der Aufnahmeraum 15, kann sie folglich stufenlos in unterschiedlichen Positionen zwischen den beiden Gehäusedeckeln 4, 5 positioniert werden.

Die Abstützeinheit 45 enthält wenigstens zwei - beim Ausführungsbeispiel genau zwei - Abstützköpfe 46. Jeder dieser Abstützköpfe 46 umschließt die Antriebsspindel 16, insbesondere vergleichbar einer Klammer, wobei er eine axial durchgehende Abstützöffnung 47 aufweist, die von der Antriebsspindel 16 und hierbei insbesondere auch deren Gewindeabschnitt 25 durchsetzt ist.

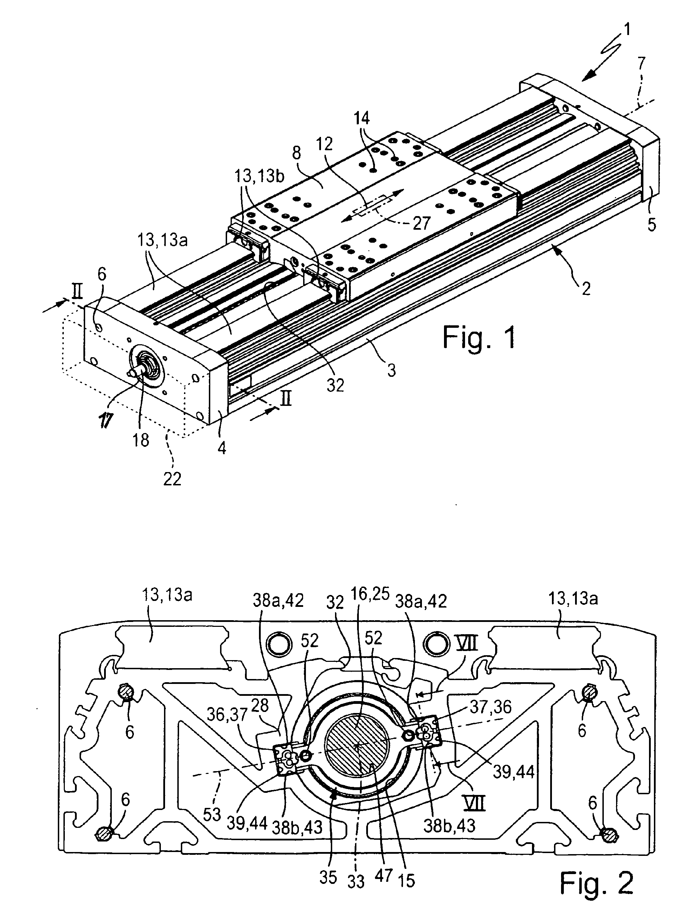

Wie insbesondere der Figur 2 entnommen werden kann, ist der Außendurchmesser des Gewindeabschnittes 25 gleich groß oder nur geringfügig kleiner als der Innendurchmesser der Abstützöffnung 47, derart, dass jeder Abstützkopf 46 die Antriebsspindel 16 gleitverschieblich umfasst und für die Antriebsspindel 16 die Möglichkeit besteht, sich relativ zu jedem Abstützkopf 46 zu verdrehen. Angestrebt ist ein möglichst spielfreies oder zumindest sehr spielarmes Umfassen der Antriebsspindel 16 durch jeden Abstützkopf 46.

Die beiden Abstützköpfe 46 sind mit in Achsrichtung der Längsachse 33 gemessenem Abstand zueinander angeordnet. Der zwischen den Abstützköpfen 46 vorhandene axiale Zwischenraum ist durch eine Strebenanordnung 48 überbrückt, die sich zwischen den beiden Abstützköpfen 46 axial erstreckt und die beim Ausführungsbeispiel an beiden Abstützköpfen 46 befestigt ist.

Somit sind die Abstützköpfe 46 und die Strebenanordnung 48 zu einer Baueinheit zusammengefasst. Die Strebenanordnung 48 ist schub- und zugfest ausgebildet und gewährleistet einen stets konstanten axialen Abstand zwischen den beiden Abstützköpfen 46.

Vorzugsweise besteht die Strebenanordnung 48 aus mehreren sich axial erstreckenden stabförmigen Verbindungsstreben 52. Diese Verbindungsstreben 52 sind beispielsweise in der Form von Drähten, insbesondere aus Metall bestehend, realisiert. Jede Verbindungsstrebe 52 ist mit ihren beiden Endabschnitten an jeweils einem der beiden Abstützköpfe 46 verankert.

Als besonders vorteilhaft hat es sich erwiesen, wenn die Strebenanordnung 48 über lediglich zwei Verbindungsstreben 52 verfügt, die auf bezüglich der Längsachse 33 einander diametral entgegengesetzten Seiten der Antriebsspindel 16 platziert sind. Denkt man sich eine als Abstützebene 53 bezeichnete Ebene, die die beiden dritten Führungsflächen 44 rechtwinkelig schneidet und in der auch die Längsachse 33 verläuft, so sind die Verbindungsstreben 52 insbesondere so platziert, dass auch sie sich in der Abstützebene 53 erstrecken.

Durch die Strebenanordnung 48 wird erreicht, dass sich die Abstützeinheit 45 als Ganzes axial bewegt, wenn momentan in nur einen der Abstützköpfe 46 eine entsprechende Betätigungskraft eingeleitet wird.

Jeder Abstützkopf 46 verfügt über mehrere und hierbei insbesondere über eine der Anzahl der Führungsabschnitte 36 entsprechende Anzahl von Abstützabschnitten 54. Die Abstützabschnitte 54 sind in gleicher Weise wie die Führungsabschnitte 36 um die Antriebsspindel 16 herum verteilt, wobei jedem Führungsabschnitt 36 ein eigener Abstützabschnitt 54 zugeordnet ist und die auf diese Weise einander paarweise zugeordneten Führungsabschnitte 36 und Abstützabschnitte 54 gleitverschieblich in Eingriff miteinander stehen.

Genauer gesagt verfügt jeder Abstützabschnitt 54 bevorzugt über mehrere Abstützflächen 55a, 55b, 56a, 56b, die jeweils gleitverschieblich an einer der Führungsflächen 42, 43, 44 anliegen.

Alle Abstützflächen 55a, 55b, 56a, 56b sind bevorzugt streifenförmig gestaltet und liegen plan an einer gegenüberliegenden Führungsfläche 42, 43, 44 an.

In Anpassung an die Längsnuten 37 sind die Abstützabschnitte 54 beim Ausführungsbeispiel jeweils von einem insbesondere flügelartig abstehenden, radialen Vorsprung 57 gebildet. Dieser radiale Vorsprung 57 weist die Abstützflächen 55a, 55b; 56a, 56b auf und taucht in die zugeordnete Längsnut 37 ein.

An jedem radialen Vorsprung 57 des Abstützkopfes 46 sind zwei bezüglich der Längsachse 33 in einander entgegengesetzte Umfangsrichtungen orientierte erste Abstützflächen 55a, 56a angeordnet. Von diesen beiden ersten Abstützflächen 55a, 56a liegt die eine (55a) an der ersten Führungsfläche 42 und die andere (56a) an der gegenüberliegenden zweiten Führungsfläche 43 an. Auf diese Weise erfolgt eine Abstützung jedes Abstützkopfes (46) gegen ein an dem Abstützkopf 46 angreifendes Drehmoment. Jeder Abstützkopf 46 ist somit bezüglich dem Gehäuse 2 unverdrehbar fixiert.

Mindestens eine zweite Abstützfläche - beim Ausführungsbeispiel sind es jeweils zwei zweite Abstützflächen 55b, 56b - ist bzw. sind bezüglich der Längsachse 33 radial nach außen orientiert. Sie verlaufen in zu der Abstützebene 53 rechtwinkeligen Ebenen und liegen jeweils an einer der von einem Nutgrund 39 gebildeten dritten Führungsflächen 44 an. Da jeder Abstützabschnitt 54 mindestens eine solche zweite Abstützfläche 55b, 56b aufweist und die zweiten Abstützflächen 55b, 56b der beiden Abstützabschnitte 54 einander entgegengesetzt orientiert sind, ergibt sich auch eine Querabstützung jedes Abstützkopfes 46 in bezüglich der Längsachse 33 radialer Richtung.

Bei einem nicht dargestellten Ausführungsbeispiel sind die Führungsabschnitte 36 in Form von sich parallel zu der Längsachse 33 erstreckenden rippenartigen Vorsprüngen ausgebildet, die in Ausnehmungen eingreifen, die an den Abstützköpfen 46 ausgebildet sind. In diesem Fall befinden sich die Führungsflächen am Außenumfang der rippenartigen Führungsabschnitte und die Abstützflächen am Innenumfang der genannten Ausnehmungen. Die beim Ausführungsbeispiel realisierte Gestaltung wird allerdings als vorteilhafter eingestuft.

Die beiden Abstützköpfe 46 sind auf axial entgegengesetzten Seiten des Abtriebsteiles 26 platziert. Das Abtriebsteil 26 befindet sich daher in dem zwischen den beiden Abstützköpfen 46 vorhandenen axialen Zwischenraum. Wenn das Abtriebsteil 26 somit im Rahmen seiner Abtriebsbewegung 34 an der ihm zugewandten inneren Stirnfläche eines Abstützkopfes 46 zur Anlage gelangt, übt es bei fortgesetzter Bewegung eine Schubkraft auf diesen Abstützkopf 46 aus und nimmt ihn mit. Als Folge hiervon führt auch die Abstützeinheit 45 eine durch einen Doppelpfeil angedeutete Linearbewegung 58 aus, was zur Folge hat, dass sich die durch das Zusammenwirken zwischen den Abstützköpfen 46 und den Führungsabschnitten 36 definierte Abstützzone in der Längsrichtung der Antriebsspindel 16 verlagert.

Jeder Abstützkopf 46 verfügt über einen als Kopfkörper 62 bezeichneten starren Grundkörper, der zweckmäßigerweise die Abstützöffnung 47 definiert. Die Abstützflächen 55a, 55b, 56a, 56b sind nicht direkt an diesem Kopfkörper 62 ausgebildet, sondern an diesbezüglich gesonderten Abstützelementen 63, 64.

Jedes Abstützelement 63, 64 ist rechtwinkelig zu der an ihm ausgebildeten Abstützfläche 55a, 55b; 56a, 56b relativ zu dem Kopfkörper 62 zumindest begrenzt beweglich. Diese begrenzte Beweglichkeit wird dadurch erreicht, dass zwischen jedem Abstützelement 63, 64 und dem Kopfkörper 62 eine elastisch nachgiebige Dämpfungsschicht 65 angeordnet ist, die vorzugsweise über gummielastische Eigenschaften verfügt.

Die elastische bzw. flexible Dämpfungsschicht 65 ist in ihrer Dicke und in ihrer Beschaffenheit so gewählt, dass sie das zugeordnete Abstützelement 63 oder 64 mit seinen Abstützflächen 55a, 55b; 56a, 56b in nachgiebiger Weise an die jeweils zugeordnete(n) Führungsfläche(n) 42, 43, 44 andrückt.

Auf diese Weise sind die Abstützflächen 55a, 55b; 56a, 56b und die Führungsflächen 42, 43, 44 gegeneinander vorgespannt, wobei die Dämpfungsschicht 65 unter anderem dafür sorgt, dass auch bei hohen Verfahrgeschwindigkeiten ein stets sicherer, flächenhafter Kontakt zwischen den genannten Flächen vorliegt und kein Abheben von Flächen voneinander stattfindet, was zu einem geräuschvollen Rattern führen könnte.

Die Dämpfungsschicht 65 bewirkt aufgrund ihrer Flexibilität bzw. Nachgiebigkeit außerdem, dass etwaige Vibrationen der Abstützeinheit 45 nicht oder zumindest nicht in nennenswertem Maße in das Gehäuse 2 eingeleitet werden, das folglich auch bei Hochgeschwindigkeitsanwendungen nicht zu Vibrationen bzw. Schwingungen angeregt wird.

Als Material für die Dämpfungsschicht wird insbesondere ein Schaumstoffmaterial gewählt. Als besonders vorteilhaft hat sich Polyurethanschaum erwiesen.

Vorzugsweise verfügt jeder Abstützabschnitt 54 jedes Abstützkopfes 46 über zwei relativ zueinander und unabhängig voneinander relativ zum zugeordneten Kopfkörper 62 bewegliche Abstützelemente 63, 64 (im Folgenden auch als erstes Abstützelement 63 und zweites Abstützelement 64 bezeichnet). Jedes Abstützelement 63, 64 verfügt über mindestens eine mit einer der Führungsflächen 42, 43, 44 zusammenwirkende Abstützfläche.

Der Kopfkörper 63 verfügt beim Ausführungsbeispiel über einen die Abstützöffnung 47 aufweisenden hülsenförmigen Zentralabschnitt 66 und über zwei an einander diametral entgegengesetzten Außenumfangsabschnitten dieses Zentralabschnittes 66 angeordnete, nach außen ragende Radialvorsprünge 67. Die beiden Radialvorsprünge 67 sind mit dem Zentralabschnitt 66 zweckmäßigerweise einstückig verbunden und sind insbesondere nach Art von sich in axialer Richtung erstreckenden Längsrippen gestaltet. Die beiden Radialvorsprünge 67 ragen flügelartig von dem hülsenförmigen Zentralabschnitt 66 weg.

Jeder Radialvorsprung 67 ist Bestandteil eines der beiden Abstützabschnitte 64. Insbesondere trägt jeder der beiden Radialvorsprünge 67 sowohl ein erstes Abstützelement 63 als auch ein zweites Abstützelement 64.

Die beiden Abstützelemente 63, 64 haben zweckmäßigerweise einen L-förmigen Querschnitt. Dementsprechend verfügen sie jeweils über einen ersten L-Schenkel 68a und einen hierzu rechtwinkeligen zweiten L-Schenkel 68b. Die Außenfläche des ersten L-Schenkels 68a bildet eine der ersten Abschnittsflächen 55a, 56a, der zweite L-Schenkel 68b bildet an seiner Außenfläche jeweils eine der zweiten Abstützflächen 55b, 56b.

Jeder Radialvorsprung 67 des Kopfkörpers 62 verfügt über zwei einander entgegengesetzte, bezüglich der Längsachse 33 in einander entgegengesetzte Umfangsrichtungen orientierte Seitenflächen 72, 73 sowie eine nach radial außen orientierte äußere Abschlussfläche 74. An den in der Achsrichtung der Längsachse 33 orientierten Seiten weist jeder Radialvorsprung 67 eine Stirnfläche 75 auf.

Die Abstützelemente 63, 64 sind nun so am jeweils zugeordneten Radialvorsprung 67 montiert, dass der erste L-Schenkel 68a des ersten Abstützelementes 63 über der einen Seitenfläche 72 liegt und der erste L-Schenkel 68a des zweiten Abstützelementes 64 sich über der anderen Seitenfläche 73 erstreckt. Gleichzeitig erstrecken sich die zweiten L-Schenkel 68b beider Abstützelemente 63, 64 vor die äußere Abschlussfläche 74. Auf diese Weise ergibt sich eine Konstellation, bei der der Radialvorsprung 67 von den beiden Abstützelementen 63, 64 gemeinsam etwa U-ähnlich übergriffen wird.

Zwischen jeder Seitenfläche 72, 73 und dem gegenüberliegenden ersten L-Schenkel 68a ist eine Dämpfungsschicht 65 angeordnet. Ebenso befindet sich zwischen der äußeren Abschlussfläche 74 und jedem zweiten L-Schenkel 68b ebenfalls eine Dämpfungsschicht 65.

Die Abstützelemente 63, 64 sind so ausgebildet und angeordnet, dass sie sich - abgesehen von einer noch zu erläuternden flexiblen Filmscharnieranordnung 76 - zu keiner Zeit berühren und sich zwischen ihnen ein Trennspalt 77 erstreckt. Auf diese Weise können die Abstützelemente 63, 64 unter reversibler Verformung der zugeordneten Dämpfungsschichten 65 unabhängig voneinander relativ zu dem Radialvorsprung 67 bewegt werden. Jedes Abstützelemente 63, 64 ist insbesondere in der Lage, sich in der Normalenrichtung jeder der beiden an ihm angeordneten Abstützflächen 55a, 55b; 56a, 56b zu bewegen, wobei diese beiden Bewegungen auch unabhängig voneinander bzw. sich überlagernd stattfinden können. Mithin ist eine individuelle Lageanpassung jedes Abstützelementes 63, 64 an die momentan zwischen dem Gehäuse 2 und einem Kopfkörper 62 eingenommene Relativposition möglich.

Die Dämpfungsschichten 65 könnten beispielsweise durch ein geeignetes Auftragsverfahren, beispielsweise durch Spritzgießen, aufgebracht werden. Besonders vorteilhaft ist jedoch die beim Ausführungsbeispiel verwirklichte Variante, bei der jede Dämpfungsschicht 65 als Bestandteil eines sowohl bezüglich des Kopfkörpers 62 als auch bezüglich des zugeordneten Abstützelementes 63, 64 gesonderten Dämpfungselementes 78 ausgeführt ist. Dieses Dämpfungselement 78 kann bequem zwischen dem Radialvorsprung 67 und den Abstützelementen 63, 64 montiert werden.

Prinzipiell könnten die einem jeweiligen Abstützabschnitt 64 zugeordneten Dämpfungsschichten 65 als individuelle Schichten ausgeführt sein. Exemplarisch sind sie allerdings in vorteilhafter Weise zu einer Verbundschicht zusammengefasst. Insbesondere ist hierbei vorgesehen, pro Abstützabschnitt 64 ein einziges Dämpfungselement 78 zu verwenden, das die zugeordneten Dämpfungsschichten 65 in sich vereinigt.

Das Ausführungsbeispiel sieht in diesem Zusammenhang ein U-förmig gestaltetes Dämpfungselement 78 vor, das von radial außen her reiterartig auf den zugeordneten Radialvorsprung 67 aufgesetzt ist und das über zwei Schenkel und einen Verbindungsabschnitt verfügt, die jeweils eine der Dämpfungsschichten 65 bilden.

Das Dämpfungselement 78 ist insbesondere ein vor der Montage ebenes, insbesondere platten-, matten- oder streifenförmig ausgebildetes biegeflexibles Element, das sich vor dem Anbringen oder beim Anbringen an einen Radialvorsprung 67 in die bevorzugte U-förmige Gestalt biegen lässt.

Denkbar wäre es allerdings auch, an jeder der beiden Seitenflächen 72, 73 und an der äußeren Abschlussfläche 74 jeweils ein individuelles Dämpfungselement 78 vorzusehen.

Es ist empfehlenswert, das Dämpfungselement 78 wenigstens an dem Kopfkörper 62 oder an dem mindestens einen zugeordneten Abstützelement 63, 64 zu befestigen. Diese Befestigung geschieht zweckmäßigerweise mittels einer Klebeverbindung. Exemplarisch ist das Dämpfungselement 78 an den zugeordneten Radialvorsprung 67 angeklebt. Es kann zu diesem Zweck an seiner dem Radialvorsprung 67 zugewandten Fläche mit einer Selbstklebefläche versehen sein.

Beim Zusammenbau eines Abstützkopfes 46 werden somit zunächst die Dämpfungselemente 78 an die Radialvorsprünge 67 angeklebt und anschließend die Abstützelemente 63, 64, insbesondere von radial außen her, angesetzt.

Zur Vereinfachung ihrer Montage können die einem jeweiligen Abstützabschnitt 54 zugeordneten zwei Abstützelemente 63, 64 durch die schon erwähnte Filmscharnieranordnung 76 zu einer einheitlich handhabbaren Baueinheit zusammengefasst sein. Die Filmscharnieranordnung 76, die aus einem oder mehreren Filmscharnieren bestehen kann, also aus einem oder mehreren dünnen und biegeflexiblen Materialbereichen, überbrückt den Trennspalt 77 an einer oder mehreren Stellen, ohne die relative Beweglichkeit der beiden Abstützelemente 63, 64 zu beeinträchtigen.

Die Filmscharnieranordnung 76 kann bei Bedarf nach dem Ansetzen der Abstützelemente 63, 64 auch durchtrennt werden.

Damit die insbesondere nur lose angesetzten Abstützelemente 63, 64 ihre Axialposition bezüglich dem Kopfkörper 62 stets beibehalten, können sie mit Anschlagmitteln ausgestattet sein, die zur Positionsvorgabe mit dem Kopfkörper 62 kooperieren.

Exemplarisch ist jedes Abstützelement 63, 64 an beiden axial orientierten Stirnseiten mit einer als Anschlagmittel fungierenden Haltewand 79 versehen, die im an den Kopfkörper 62 angesetzten Zustand vor dessen zugeordnete Stirnfläche 75 ragt. Die Haltewand 79 erstreckt sich insbesondere zwischen den beiden L-Schenkeln 68a, 68b. Indem der Radialvorsprung 67 zwischen den beiden Haltewänden 79 eines jeweiligen Abstützelementes 63, 64 zu liegen kommt, ist letzteres in der Achsrichtung der Längsachse 33 im wesentlichen unbeweglich bezüglich dem Kopfkörper 62 fixiert.

Die Filmscharnieranordnung 76 ist zweckmäßigerweise in Form zweier Filmscharniere realisiert, die an den beiden Stirnseiten der zu verbindenden Abstützelemente 63, 64 angeordnet sind und dort die zweckmäßigerweise vorhandenen Haltewände 79 miteinander verbinden.

Zur Befestigung der stabförmigen Verbindungsstreben 52 an den Abstützköpfen 46 verfügt jeder Kopfkörper 62 zweckmäßigerweise über mindestens eine axial durchgehende Aufnahmebohrung 83, in die die betreffende Verbindungsstrebe 52 mit ihrem Endabschnitt einschiebbar bzw. eingeschoben ist.

Die Aufnahmebohrung 83 befindet sich vorzugsweise in einem der Radialvorsprünge 67. Zweckmäßigerweise weist jeder Radialvorsprung 67 mindestens eine Aufnahmebohrung 83 auf, in die eine Verbindungsstrebe 52 eingesteckt ist.

Jeder Radialvorsprung 67 ist darüberhinaus quer zur Längsrichtung der Aufnahmebohrung 83 von mindestens einer Querbohrung 84 durchsetzt, die die Aufnahmebohrung 83 durchquert. Exemplarisch sind insgesamt drei Querbohrungen 84 in Längsrichtung der Aufnahmebohrung 83 mit Abstand aufeinanderfolgend pro Radialvorsprung 67 vorhanden.

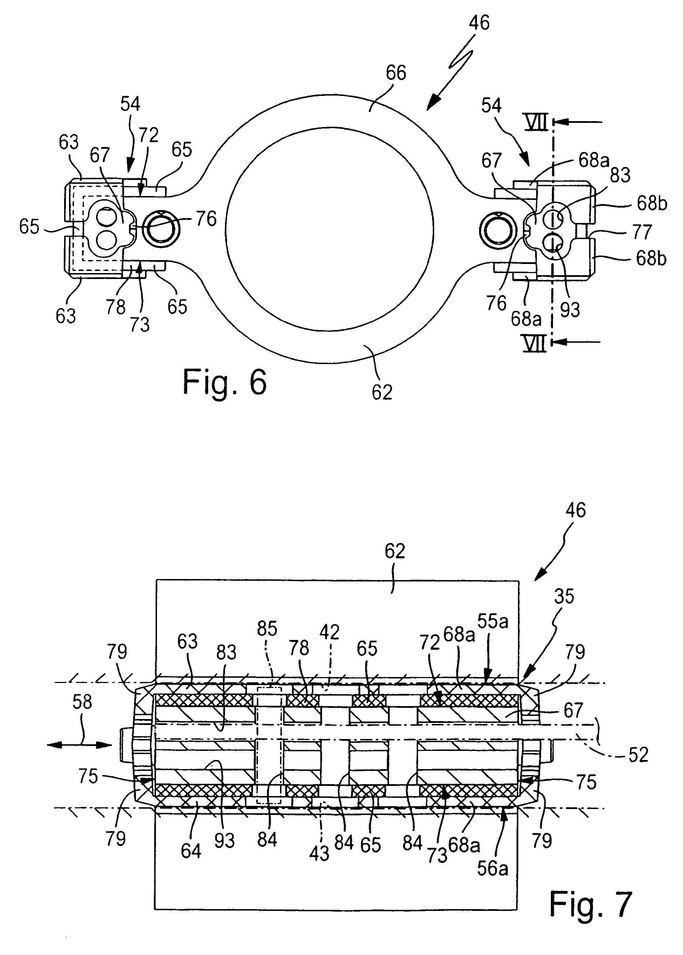

In mindestens eine und zweckmäßigerweise in jede Querbohrung 84 ist eine beim Ausführungsbeispiel im Wesentlichen zylindrisch ausgebildete Befestigungsklemme 85 eingesetzt. In Figur 7 ist nur eine davon angedeutet. Die Befestigungsklemme 85 verfügt über mindestens eine mit der Aufnahmebohrung 83 fluchtende Durchgangsbohrung 86, die von der eingesteckten Verbindungsstrebe 52 ebenfalls durchsetzt wird. Die Durchgangsbohrung 86 ist in einem bevorzugt hohlen Grundkörper 82 der Befestigungsklemme 85 ausgebildet, in den stirnseitig eine bevorzugt als Madenschraube ausgebildete Klemmschraube 87 einschraubbar ist, um auf die die Durchgangsbohrung 86 durchsetzende Verbindungsstrebe 52 einzuwirken und selbige mit dem Grundkörper 82 zu verspannen.

Zweckmäßigerweise verfügt die an einer jeweiligen Seitenfläche 72, 73 angeordnete Dämpfungsschicht 65 über Durchgangslöcher 88, die mit den Querbohrungen 84 fluchten. In vergleichbarer Weise sind die Abstützelemente 63, 64 an ihren ersten L-Schenkeln 68 ebenfalls von Durchgangslöchern 89 durchsetzt, die wiederum mit den Querbohrungen 84 fluchten. Auf diese Weise sind die Querbohrungen 84 zum Einsetzen und Betätigen der Befestigungsklemmen 85 auch dann gut zugänglich, wenn die mindestens eine Dämpfungsschicht 65 und die Abstützelemente 63, 64 montiert sind.

Falls die Befestigungsklemmen 85 in die Durchgangslöcher 89 der Abstützelemente 63, 64 hineinragen, sollte der Durchmesser dieser Durchgangslöcher 89 ausreichend groß sein, um die angestrebte relative Beweglichkeit zwischen den Abstützelementen 63, 64 und dem Kopfkörper 62 nicht zu behindern.

Die Spindelabstützeinrichtung 35 kann mindestens eine weitere Abstützeinheit aufweisen, die vergleichbar der beschriebenen Abstützeinheit 45 ausgestattet ist. Die Anordnung ist dann zweckmäßigerweise so getroffen, dass die beschriebene Abstützeinheit 45 zwischen den in einem größeren axialen Abstand zueinander angeordneten Abstützköpfen der weiteren Abstützeinheit angeordnet ist, wobei die Verbindungsstreben der weiteren Abstützeinheit über eine entsprechend größere Baulänge verfügen.

Die mehreren Abstützeinheiten sind dann insbesondere so angeordnet, dass sie in axialer Richtung relativ zueinander verschiebbar sind. Um dies zu gewährleisten, können die Abstützköpfe 46 der beschriebenen Abstützeinheit 45 mindestens eine axiale Durchgangsbohrung 93 aufweisen, die von einer Verbindungsstrebe der weiteren Abstützeinheit axial verschieblich durchsetzt ist. Die relative Verschiebbarkeit in axialer Richtung zwischen den beiden Abstützeinheiten ist dann gepaart mit einer gegenseitigen Verdrehsicherung aufgrund der die Durchgangsbohrungen 93 durchsetzenden weiteren Verbindungsstreben.

Zur Dämpfung des Endaufpralls der Abstützeinheit 45 an den Gehäusedeckeln 4, 5 oder an Abstützköpfen 46 einer weiteren Abstützeinheit 45, kann jeder Abstützkopf 46 mit einem oder mehreren gummielastischen Pufferelementen 94 versehen sein. Jedes Pufferelement 94 ist zweckmäßigerweise in eine stirnseitige Aufnahmebohrung 95 des Kopfkörpers 62 derart eingesetzt, dass er ein Stück weit über die Stirnfläche des Kopfkörpers 62 vorsteht. Die Aufnahmebohrungen 95 sind bevorzugt in den Radialvorsprüngen 67 ausgebildet.

## Patentansprüche

1. Spindelantriebsvorrichtung, mit einem Gehäuse (2), in dem sich eine drehbare Antriebsspindel (16) erstreckt, und mit einer Spindelabstützeinrichtung (35) zur Querabstützung der Antriebsspindel (16) bezüglich dem Gehäuse (2), wobei die Spindelabstützeinrichtung (35) mehrere um die Antriebsspindel (16) herum verteilt an dem Gehäuse (2) angeordnete, sich parallel zu der Antriebsspindel (16) erstreckende Führungsabschnitte (36) aufweist und außerdem über mindestens eine relativ zu der Antriebsspindel (16) und zu dem Gehäuse (2) axial verschiebbare Abstützeinheit (45) verfügt, die wenigstens zwei die Antriebsspindel (16) unter axialem Abstand zueinander umschließende und durch eine Strebenanordnung (48) miteinander verbundene Abstützköpfe (46) umfasst, die jeweils mehrere mit jeweils einem der Führungsabschnitte (36) in Führungseingriff stehende Abstützabschnitte (54) aufweisen, wobei jeder Abstützabschnitt (54) mindestens eine gleitverschieblich an einer Führungsfläche (42, 43, 44) des zugeordneten Führungsabschnittes (36) anliegende Abstützfläche (55a, 55b; 56a, 56b) aufweist, die Bestandteil eines als gesondertes Element an einem Kopfkörper (62) des Abstützkopfes (46) fixierten Abstützelementes (63, 64) ist, **dadurch gekennzeichnet, dass** die Führungsabschnitte (36) von sich in der Achsrichtung der Antriebsspindel (16) erstreckenden Längsnuten (37) und die Abstützabschnitte (54) von in jeweils einen der nutförmigen Führungsabschnitte (36) eintauchenden Vorsprüngen (57) der Abstützköpfe (46) gebildet sind, wobei zwischen dem Abstützelement (63, 64) und dem Kopfkörper (62) mindestens eine elastisch nachgiebige Dämpfungsschicht (65) angeordnet ist, durch die das Abstützelement (63, 64) mit seiner Abstützfläche (55a, 55b; 56a, 56b) in nachgiebiger Weise an die Führungsfläche (42, 43, 44) angedrückt ist.

2. Spindelantriebsvorrichtung nach Anspruch 1, **dadurch gekennzeichnet, dass** auf der Antriebsspindel (16) ein mit der Antriebsspindel (16) in Gewindeeingriff stehendes und beim Verdrehen der Antriebsspindel (16) eine in Achsrichtung der Antriebsspindel (16) orientierte lineare Abtriebsbewegung (34) ausführendes Abtriebsteil (26) angeordnet ist, wobei dieses Abtriebsteil (26) zwischen den beiden Abstützköpfen (46) der Abstützeinheit (45) angeordnet ist und je nach axialer Bewegungsrichtung entweder auf den einen oder auf den anderen Abstützkopf (46) eine ein axiales Verschieben der Abstützeinheit (45) hervorrufende Schubkraft ausüben kann.

3. Spindelantriebsvorrichtung nach Anspruch 2, **dadurch gekennzeichnet, dass** außen an dem Gehäuse (2) ein Schlittenkörper (8) axial verschiebbar geführt angeordnet ist, der mit dem Abtriebsteil (26) bewegungsgekoppelt ist.

4. Spindelantriebsvorrichtung nach einem der Ansprüche 1 bis 3, **dadurch gekennzeichnet, dass** die mindestens eine Dämpfungsschicht (65) gummielastisch nachgiebige Eigenschaften hat und/oder aus einem Schaumstoff besteht, insbesondere aus einem Polyurethanschaum.

5. Spindelantriebsvorrichtung nach einem der Ansprüche 1 bis 4, **dadurch gekennzeichnet, dass** die mindestens eine Dämpfungsschicht (65) als Bestandteil eines gesonderten Dämpfungselementes (78) ausgeführt ist, das zwischen dem Abstützelement (63, 64) und dem Kopfkörper (62) angeordnet ist und das zweckmäßigerweise an wenigstens einem dieser Bauteile befestigt ist, beispielsweise mittels einer Klebeverbindung.

6. Spindelantriebsvorrichtung nach einem der Ansprüche 1 bis 5, **dadurch gekennzeichnet, dass** jeder Abstützabschnitt (54) zwei relativ zueinander und unabhängig voneinander relativ zum Kopfkörper (62) bewegliche Abstützelemente (63, 64) mit jeweils mindestens einer an einer Führungsfläche (42, 43, 44) anliegenden Abstützfläche (55a, 55b; 56a, 56b) aufweist.

7. Spindelantriebsvorrichtung nach einem der Ansprüche 1 bis 6, **dadurch gekennzeichnet, dass** jeder Abstützabschnitt (54) zwei Abstützelemente (63, 64) aufweist, die jeweils eine von zwei einander entgegengesetzt orientierten Abstützflächen (55a, 55b) aufweisen und die unabhängig voneinander über jeweils mindestens eine Dämpfungsschicht (65) am zugeordneten Kopfkörper (62) abgestützt sind, derart, dass sie unter elastischer Verformung der Dämpfungsschichten (65) in der Normalenrichtung der Abstützflächen (55a, 56a) relativ zueinander und relativ zum Kopfkörper (62) beweglich sind, wobei jeder Abstützfläche (55a, 56a) eine Führungsfläche (42, 43) gegenüberliegt.

8. Spindelantriebsvorrichtung nach Anspruch 7, **dadurch gekennzeichnet, dass** die beiden Abstützelemente (63, 64) mittels einer flexiblen Filmscharnieranordnung (76) zu einer Baueinheit zusammengefasst sind, innerhalb der sie relativ zueinander beweglich sind.

9. Spindelantriebsvorrichtung nach Anspruch 7 oder 8, **dadurch gekennzeichnet, dass** jedes Abstützelement (63,64) eine winkelig und insbesondere rechtwinkelig zu der Abstützfläche (55a, 56a) angeordnete weitere Abstützfläche (55b, 56b) aufweist, der eine weitere Führungsfläche (44) des Führungsabschnittes (36) gegenüberliegt, wobei das Abstützelement (63, 64) aufgrund der zugeordneten Dämpfungsschicht (65) unabhängig voneinander rechtwinkelig zu beiden Abstützflächen (55a, 55b; 56a, 56b) relativ zum Kopfkörper (62) beweglich ist.

10. Spindelantriebsvorrichtung nach Anspruch 9, **dadurch gekennzeichnet, dass** sowohl die beiden Nutflanken (38a, 38b) als auch der Nutgrund (39) der als Längsnuten (37) ausgebildeten Führungsabschnitte (36) jeweils eine Führungsfläche (42, 43, 44) bilden, wobei der zugeordnete Abstützabschnitt (54) über mehrere Abstützflächen (55a, 55b; 56a, 56b) verfügt, die jeweils an einer der Führungsflächen (42, 43, 44) gleitverschieblich anliegen.

11. Spindelantriebsvorrichtung nach einem der Ansprüche 1 bis 10, **dadurch gekennzeichnet, dass** der Abstützabschnitt (54) zwei im Querschnitt L-förmige Abstützelemente (63, 64) aufweist, die jeweils mittels mindestens einer Dämpfungsschicht (65) bezüglich dem Kopfkörper (62) nachgiebig abgestützt sind und die jeweils zwei zueinander rechtwinkelige Abstützflächen (55a, 55b; 56a, 56b) aufweisen, von denen die jeweils eine an einer Nutflanke (38a, 38b) und die jeweils andere am Nutgrund (39) eines als Längsnut (37) ausgebildeten Führungsabschnittes (36) gleitverschieblich anliegt.

12. Spindelantriebsvorrichtung nach Anspruch 11, **dadurch gekennzeichnet, dass** die Abstützelemente (63, 64) an beiden Stirnseiten über sich zweckmäßigerweise zwischen den beiden L-Schenkeln (68a, 68b) erstreckende Haltwände (79) verfügen, wobei jedes Abstützelement (63, 64) quer zur Achsrichtung der Antriebsspindel (16) auf einen Radialvorsprung (67) des Kopfkörpers (62) aufgesetzt ist, so dass dieser Radialvorsprung (67) an beiden Stirnseiten von je einer der Haltewände (79) flankiert ist und dadurch das Abstützelement (63, 64) axial bezüglich dem Kopfkörper (62) fixiert ist.

13. Spindelantriebsvorrichtung nach einem der Ansprüche 1 bis 12, **dadurch gekennzeichnet, dass** jeder Abstützabschnitt (54) einen Radialvorsprung (67) des Kopfkörpers (62) aufweist, der U-förmig von einem mindestens eine Dämpfungsschicht (65) bildenden Dämpfungselement (78) umgriffen ist, auf das das mindestens eine Abstützelement (63, 64) aufgesetzt ist.

14. Spindelantriebsvorrichtung nach einem der Ansprüche 1 bis 13, **dadurch gekennzeichnet, dass** die Strebenanordnung (48) mehrere sich axial zwischen den Abstützköpfen (46) erstreckende stabförmige Verbindungsstreben (52) aufweist, die jeweils in eine Aufnahmebohrung (83) des zugeordneten Kopfkörpers eingesteckt sind, wobei sie mindestens eine Befestigungsklemme (85) durchsetzen, die in eine die Aufnahmebohrung (83) durchquerende Querbohrung (84) eingesetzt ist, wobei zweckmäßigerweise zumindest die Dämpfungsschicht (65) und zweckmäßigerweise auch das mindestens eine Abstützelement (63, 64) über ein mit der Querbohrung (84) fluchtendes Durchgangsloch (89, 93) verfügt.

## Claims

1. Spindle drive unit with a housing (2) in which extends a rotatable drive spindle (16), and with a spindle support fixture (35) for lateral support of the drive spindle (16) relative to the housing (2), wherein the spindle support fixture (35) has several guide sections (36) distributed around the housing (2) and extending parallel to the drive spindle (16), and also with at least one support unit (45) capable of axial movement relative to the drive spindle (16) and to the housing (2), and comprising at least two support heads (46) encompassing the drive spindle (16) with axial clearance and joined together by means of a brace arrangement (48) and each having several support sections (54) in guiding engagement with respectively one of the guide sections (36), wherein each support section (54) has at least one support face (55a, 55b; 56a, 56b), in sliding movement contact with a guide surface (42, 43, 44) of the assigned guide section (36) and forming part of a support element (63, 64) fixed as a separate element to a head member (62) of the support head (46), **characterised in that** the guide sections (36) are formed by longitudinal slots (37) extending in the axial direction of the drive spindle (16), and the support sections (54) by projections (57) of the support heads (46) dipping in each case into one of the slot-shaped guide sections (36), wherein there is provided between the support element (63, 64) and the head member (62) at least one flexible elastic damping layer (65), by means of which the support element (63, 64) is pressed in a flexible manner by its support face (55a, 55b; 56a, 56b) against the guide surface (42, 43, 44).

2. Spindle drive unit according to claim 1, **characterised in that** mounted on the drive spindle (16) is an output member (26) in threaded engagement with the drive spindle (16) and, on rotation of the drive spindle (16) executing a linear output movement (34) oriented in the axial direction of the drive spindle (16), wherein this output member (26) is located between the two support heads (46) of the support unit (45) and, depending on the axial direction of movement, is able to exert on one or the other support head (46) a shear force generating an axial movement of the support unit (45).

3. Spindle drive unit according to claim 2, **characterised in that** mounted on the outside of the housing (2) with axial movement guidance is a carriage member (8) which is movement-coupled to the output member (26).

4. Spindle drive unit according to any of claims 1 to 3, **characterised in that** the damping layer or layers (65) has or have flexible rubber-elastic properties and is or are made of plastic, in particular polyurethane foam.

5. Spindle drive unit according to any of claims 1 to 4, **characterised in that** the damping layer or layers (65) are made as part of a separate damping element (78) which is provided between the support element (63, 64) and the head member (62) and is expediently fixed to one of these components, for example by means of an adhesive bond.

6. Spindle drive unit according to any of claims 1 to 5, **characterised in that** each support section (54) has two support elements (63, 64) movable relative to one another and independently of one another relative to the head member (62), with in each case at least one support face (55a, 55b; 56a, 56b) abutting a guide surface (42, 43, 44).

7. Spindle drive unit according to any of claims 1 to 6, **characterised in that** each support section (54) has two support elements (63, 64), each having one of two support faces (55a, 55b) oriented opposite one another, and which are supported independently of one another on the assigned head member (62) by in each case at least one damping layer (65), in such a way that they are movable, under elastic deformation of the damping layers (65), in the normal direction of the support faces (55a, 56a) relative to one another and relative to the head member (62), while each support face (55a, 56a) lies opposite a guide surface (42, 43).

8. Spindle drive unit according to claim 7, **characterised in that** the two support elements (63, 64) are combined by means of a flexible film hinge structure (76) into a single unit, within which they are movable relative to one another.

9. Spindle drive unit according to claim 7 or 8, **characterised in that** each support element (63, 64) has a further support face (55b, 56b) arranged at an angle and in particular at right-angles to the support face (55a, 56a), and which lies opposite a further guide surface (44) of the guide sections (36), wherein the support element (63, 64) is movable independently at right-angles to both support faces (55a, 55b; 56a, 56b) relative to the head member (62), on account of the assigned damping layer (65).

10. Spindle drive unit according to claim 9, **characterised in that** not only the two slot sides (38a, 38b) but also the slot base (39) of the guide sections (36) in the form of longitudinal slots (37) each form a guide surface (42, 43, 44), wherein the assigned support section (54) has several support faces (55a, 55b; 56a, 56b), each abutting one of the guide surfaces (42, 43, 44) with the ability to slide.

11. Spindle drive unit according to any of claims 1 to 10, **characterised in that** the support section (54) has two support elements (63, 64), L-shaped in cross-section, each supported flexibly relative to the head member (62) by means of at least one damping layer (65), and each having two support faces (55a, 55b; 56a, 56b) at right-angles to one another, of which respectively one makes sliding contact with a slot side (38a, 38b) and the other respectively makes sliding contact with the slot base (39) of a guide section (36) in the form of a longitudinal slot (37).

12. Spindle drive unit according to claim 11, **characterised in that** on both end faces the support elements (63, 64) have retaining walls (79) extending expediently between the two L-legs (68a, 68b), wherein each support element (63, 64) is mounted on a radial projection (67) of the head member (62) at right-angles to the axial direction of the drive spindle (16), so that this radial projection (67) is flanked at both end faces by one of the retaining walls (79) and by this means the support element (63, 64) is fixed axially relative to the head member (62).

13. Spindle drive unit according to any of claims 1 to 12, **characterised in that** each support section (54) has a radial projection (67) of the head member (62), which is encompassed in a U-shape by a damping element (78) forming a damping layer or layers (65), and on which the support element or elements(63, 64) is or are mounted.

14. Spindle drive unit according to any of claims 1 to 13, **characterised in that** the brace arrangement (48) has several rod-like connecting stays (52) extending axially between the support heads (46) and each inserted in a locating bore (83) of the assigned head member, wherein they pass through one or more fixing clamps (85) inserted in a transverse bore (84) which crosses through the locating bore (83), wherein expediently at least the damping layer (65) and expediently also the support element or elements (63, 64) have a through hole (89, 93) flush with the transverse bore (84).

## Revendications

1. Dispositif d'entraînement de broche, avec un boîtier (2), dans lequel une broche d'entraînement (16) rotative s'étend, et avec un dispositif d'appui de broche (35) pour l'appui transversal de la broche d'entraînement (16) par rapport au boîtier (2), le dispositif d'appui de broche (35) présentant plusieurs sections de guidage (36) s'étendant parallèlement à la broche d'entraînement (16), réparties autour de la broche d'entraînement (16) sur le boîtier (2) et dispose en outre d'au moins une unité d'appui (45) mobile axialement par rapport au boîtier (2) et à la broche d'entraînement (16), qui comporte au moins deux têtes d'appui (46) reliée entre elles par un ensemble d'entretoises (48) et entourant la broche d'entraînement (16) à distance axiale l'une par rapport à l'autre, lesquelles têtes présentent respectivement plusieurs sections d'appui (54) en engagement de guidage avec respectivement l'une des sections de guidage (36), chaque section d'appui (54) présentant au moins une surface d'appui (55a, 55b ; 56a, 56b) reposant par glissement sur une surface de guidage (42, 43, 44) de la section de guidage (36) associée, laquelle surface d'appui fait partie d'un élément d'appui (63, 64) fixé comme un élément séparé sur un corps de tête (62) de la tête d'appui (46), **caractérisé en ce que** les sections de guidage (36) sont formées par des rainures longitudinales (37) s'étendant dans le sens axial de la broche d'entraînement (16) et les sections d'appui (54) sont formées par des saillies (57) s'enfonçant dans respectivement l'une des sections de guidage (36) en forme de rainure des têtes d'appui (46), au moins une couche d'amortissement (65) flexible et élastique étant disposée entre l'élément d'appui (63, 64) et le corps de tête (62), par laquelle la surface d'appui (55a, 55b ; 56a, 56b) de l'élément d'appui (63, 64) est pressée de manière flexible sur la surface de guidage (42, 43, 44).

2. Dispositif d'entraînement de broche selon la revendication 1, **caractérisé en ce qu'**une partie de sortie (26) réalisant lors de la rotation de la broche d'entraînement (16) un mouvement de sortie (34) linéaire orienté dans le sens axial de la broche d'entraînement (16) et se tenant en engagement fileté avec la broche d'entraînement (16) est disposée sur la broche d'entraînement (16), cette partie de sortie (26) étant disposée entre les deux têtes d'appui (46) de l'unité d'appui (45) et peut exercer selon le sens de déplacement axial sur l'une ou l'autre tête d'appui (46) une force de poussée suscitant un déplacement axial de l'unité d'appui (45).

3. Dispositif d'entraînement de broche selon la revendication 2, **caractérisé en ce qu'**un corps de chariot (8), qui est couplé en mouvement avec la partie de sortie (26), est disposé de manière guidée et mobile dans le sens axial à l'extérieur sur le boîtier (2).

4. Dispositif d'entraînement de broche selon l'une quelconque des revendications 1 à 3, **caractérisé en ce que** l'au moins une couche d'amortissement (65) présente des propriétés flexibles et élastiques et/ou se compose d'une mousse, en particulier d'une mousse de polyuréthane.

5. Dispositif d'entraînement de broche selon l'une quelconque des revendications 1 à 4, **caractérisé en ce que** l'au moins une couche d'amortissement (65) est réalisée comme une partie d'un élément d'amortissement (78) séparé, qui est disposée entre l'élément d'appui (63, 64) et le corps de tête (62) et qui est fixée de manière appropriée sur au moins l'un des ces composants, par exemple à l'aide d'un assemblage collé.

6. Dispositif d'entraînement de broche selon l'une quelconque des revendications 1 à 5, **caractérisé en ce que** chaque section d'appui (54) présente deux éléments d'appui (63, 64) mobiles l'un par rapport à l'autre et indépendamment l'un de l'autre par rapport au corps de tête (62) avec respectivement au moins une surface d'appui (55a, 55b ; 56a, 56b) reposant sur une surface de guidage (42, 43, 44).

7. Dispositif d'entraînement de broche selon l'une quelconque des revendications 1 à 6, **caractérisé en ce que** chaque section d'appui (54) présente deux éléments d'appui (63, 64) qui présentent respectivement une des deux surfaces d'appui (55a, 55b) orientées à l'opposé et qui sont en appui indépendamment l'une de l'autre par respectivement au moins une couche d'amortissement (65) sur le corps de tête (62) associé de telle manière qu'ils soient mobiles en déformant élastiquement les couches d'amortissement (65) dans le sens vertical des surfaces d'appui (55a, 56a) l'un par rapport à l'autre et par rapport au corps de tête (62), une surface de guidage (42, 43) faisant face à chaque surface d'appui (55a, 56a).

8. Dispositif d'entraînement de broche selon la revendication 7, **caractérisé en ce que** les deux éléments d'appui (63, 64) sont réunis à l'aide d'un ensemble de charnière à film flexible (76) en une unité structurelle, dans laquelle ils sont mobiles l'un par rapport à l'autre.

9. Dispositif d'entraînement de broche selon la revendication 7 ou 8, **caractérisé en ce que** chaque élément d'appui (63, 64) présente une autre surface d'appui (55b, 56b) disposée de manière angulaire et en particulier à angle droit par rapport à la surface d'appui (55a, 56a), à laquelle fait face une autre surface de guidage (44) de la section de guidage (36), l'élément d'appui (63, 64) étant mobile, en raison de la couche d'amortissement (65) associée, indépendamment l'un de l'autre à angle droit par rapport aux deux surfaces d'appui (55a, 55b ; 56a, 56b) par rapport au corps de tête (62).

10. Dispositif d'entraînement de broche selon la revendication 9, **caractérisé en ce que** non seulement les deux flancs de rainure (38a, 38b) mais aussi le fond de rainure (39) des sections de guidage (36) réalisées comme des rainures longitudinales (37) forment respectivement une surface de guidage (42, 43, 44), la section d'appui associée (54) disposant de plusieurs surfaces d'appui (55a, 55b ; 56a, 56b) qui reposent respectivement par glissement sur l'une des surfaces de guidage (42, 43, 44).

11. Dispositif d'entraînement de broche selon l'une quelconque des revendications 1 à 10, **caractérisé en ce que** la section d'appui (54) présente deux éléments d'appui (63, 64), dont la section transversale est en forme de L, qui sont respectivement en appui de manière flexible à l'aide d'au moins une couche d'amortissement (65) par rapport au corps de tête (62) et qui présentent respectivement deux surfaces d'appui (55a, 55b ; 56a, 56b) à angle droit l'une par rapport à l'autre, dont respectivement l'une repose par glissement sur un flanc de rainure (38a, 38b) et l'autre sur le fond de rainure (39) d'une section de guidage (36) réalisée comme une rainure longitudinale (37).

12. Dispositif d'entraînement de broche selon la revendication 11, **caractérisé en ce que** les éléments d'appui (63, 64) disposent sur les deux côtés avant de parois de retenue (79) s'étendant de manière appropriée entre les deux branches en L (68a, 68b), chaque élément d'appui (63, 64) étant placé transversalement au sens axial de la broche d'entraînement (16) sur une saillie radiale (67) du corps de tête (62) de sorte que cette saillie radiale (67) soit flanquée sur les deux côtés avant chaque fois de l'une des parois de retenue (79) et l'élément d'appui (63, 64) soit fixé par là-même axialement par rapport au corps de tête (62).

13. Dispositif d'entraînement de broche selon l'une quelconque des revendications 1 à 12, **caractérisé en ce que** chaque section d'appui (54) présente une saillie radiale (67) du corps de tête (62) qui est entourée en forme de U par un élément d'amortissement (78) formant au moins une couche d'amortissement (65), sur lequel au moins un élément d'appui (63, 64) est placé.

14. Dispositif d'entraînement de broche selon l'une quelconque des revendications 1 à 13, **caractérisé en ce que** l'ensemble d'entretoises (48) présente plusieurs entretoises de liaison (52) en forme de barre s'étendant axialement entre les têtes d'appui (46), qui sont emboîtées respectivement dans un perçage de réception (83) du corps de tête associé, elles traversent au moins une bride de fixation (85) qui est insérée dans un perçage transversal traversant le perçage de réception (83), de manière appropriée, au moins la couche d'amortissement (65) et de manière appropriée aussi au moins un élément d'appui (63, 64) disposent d'un trou de passage (89, 93) s'alignant avec le perçage transversal (84).
